# EUROPÄISCHE PATENTANMELDUNG

(11) **EP 4 497 564 A1**
(43) Veröffentlichungstag der Anmeldung: **29.01.2025**
(21) Anmeldenummer: 23188220.0
(22) Anmeldetag: 27.07.2023
(51) Int. Cl.: B29C 43/36, B29C 43/50, B29C 43/00, B29K 311/10, B29L 7/00, B29L 31/00

(54) **VERFAHREN UND VORRICHTUNG ZUM HERSTELLEN VON BAUPLATTEN AUS KUNSTSTOFF**

(71) Anmelder: MeSentia AG, 3053 Münchenbuchsee (CH)
(72) Erfinder: LANGENEGGER, Florian, 8053 Zürich (CH); GASSER, Lukas, 3014 Bern (CH); KROPF, Martin, 3053 Münchenbuchsee (CH)
(74) Vertreter: Keller Schneider Patent- und Markenanwälte AG

(57) **Zusammenfassung**

Bei dem Verfahren wird als Ausgangsprodukt eine Werkstoffschicht (1) aus thermoplastischem Kunststoff bis zur Erweichungstemperatur des Kunststoffs erwärmt und auf einer Unterlage (2) angeordnet. Ein Werkzeug (3) mit einer der Werkstoffschicht (1) zugewandten Stirnfläche (4) und in der Stirnfläche (4) angeordneten, rechtwinklig zur Werkstoffschicht (1) orientierten Schlitzen (5) wird auf die Werkstoffschicht (1) zu bewegt und gegen diese gepresst, so dass ein Teilvolumen der Werkstoffschicht (1) in die Schlitze (5) des Werkzeugs (3) fliesst. Nach dem Zurückziehen des Werkzeugs (3) verbleiben auf der Werkstoffschicht (1) rechtwinklig aus dieser herausragende Rippen (9). Damit sich die derart verformte Werkstoffschicht leichter vom Werkzeug lösen lässt, ist das Werkzeug (3) in mehrere Werkzeugsegmente (3.1, 3.2) unterteilt, die nacheinander zurückgezogen werden.

## Beschreibung

Die Erfindung betrifft ein Verfahren zum Herstellen von Bauplatten nach dem Oberbegriff des Patentanspruchs 1.

Mit Rippen versehene Bauplatten aus Kunststoff sind allgemein bekannt. Sie besitzen gegenüber Platten ohne Rippenstruktur bei gleicher Dicke eine ähnliche Biegesteifigkeit und ein wesentlich geringes Gewicht. Sie werden insbesondere im Bauwesen und im Transportwesen, aber auch in der Raumfahrt oder beim Bau von Windrädern eingesetzt. Häufig wird die Rippenstruktur separat hergestellt, beispielsweise in Form einer Wabenstruktur, und dann mit mindestens einer Decklage verklebt. Das Herstellen einer Rippenstruktur, insbesondere Wabenstruktur aus wiederverwendetem Kunststoff ist schwierig, insbesondere wenn der Kunststoff Fasern enthält. Folglich bestehen bei Bauplatten der genannten Art in der Regel die Rippenstruktur und die Deckschicht aus Kunststoffen mit unterschiedlicher Qualität und Zusammensetzung, was wiederum deren spätere Wiederverwendung stark einschränkt. Unter Wiederverwendung soll im vorliegenden Zusammenhang die Herstellung von geschredderten Kunststoffen mit Faseranteil als Granulat für die Extrusions- oder Spritzgusstechnik verstanden werden. Wenn die Deckschicht mit der Rippenstruktur verklebt ist, wird dieses Problem durch den verwendeten Klebstoff noch verstärkt.

Das Dokument [D2] DE69716802T2 zeigt ein Verfahren zum Herstellen einer Wabenstruktur aus I<eramikmaterial nach dem Prinzip des Rückwärtsfliesspressens.

Das Dokument [D1] WO0181267A2 beschreibt ein Verfahren zum Herstellen von Wabenplatten mit geschlossenen Waben. Es sind insbesondere hydraulisch bindende Werkstoffe, also Materialien auf Zementbasis beschrieben. Es ist weder von Verbundplatten aus unterschiedlichen Werkstoffen noch von Kunststoffen die Rede.

Das Dokument WO2009097836A1 D3 betrifft eine Leichtbauplatte aus Kunststoff durch Tiefziehen einer Kunststofffolie.

Ausgehend von diesem Stand der Technik liegt der Erfindung die Aufgabe zugrunde, ein Herstellungsverfahren für Bauplatten anzugeben, bei dem die Bauplatten aus einem einzigen Werkstoff bestehen und das mit vergleichsweise geringem Aufwand ausführbar ist.
Diese Aufgabe wird durch die im kennzeichnenden Teil des Patentanspruchs 1 angegebenen Massnahmen gelöst.

Die erfindungsgemässe Lösung hat insbesondere den Vorteil, dass das Ausgangsprodukt Natur- oder Kunstfasern mit praktisch beliebiger Faserlänge enthalten kann. Das sequenzielle Zurückziehen des Werkzeugs nach dem Pressvorgang erlaubt das Entformen der Bauplatte ohne zusätzliche Rückhaltemassnahmen. Ausserdem besteht die nach dem Verfahren hergestellte Platte durchgehend aus dem gleichen Material, im Gegensatz zu herkömmlichen Platten, bei denen der aus einer Rippenstruktur bestehende Kern und die Decklage aus unterschiedlichen Materialien zusammengesetzt sind. Dies erlaubt es, nach dem erfindungsgemässen Verfahren hergestellte Baulatten zu schreddern und der Wiederverwendung zuzuführen, wenn sie nicht mehr gebraucht werden. Wenn die Bauplatten alternativ aus einem biologisch abbaubaren Werkstoff bestehen, können diese nach dem Gebrauch entsorgt werden, beispielsweise durch Kompostieren, gegebenenfalls nachdem sie zerkleinert wurden.

Besondere Ausführungsarten des erfindungsgemässen Verfahrens sind in den abhängigen Patentansprüchen definiert.

Die Erfindung betrifft auch eine Anlage zur Ausführung des erfindungsgemässen Verfahrens, mit der Bauplatten kontinuierlich hergestellt werden können.

Ausführungsbeispiele der Erfindung werden nachstehend unter Bezugnahme auf die angefügten Zeichnungen erläutert. Es zeigen
- Figur 1: eine Werkstoffschicht und ein im Abstand davon angeordnetes Werkzeug;
- Figur 2: die Anordnung nach Figur 1 mit abgesenktem Werkzeug;
- Figur 3: das sequenzielle Entfernen der Werkzeugsegmente;
- Figur 4: die Bauplatte nach dem vollständigen Entfernen des Werkzeugs;
- Figur 5: ein alternatives Werkzeug mit einer anderen Art der Trennung der einzelnen Werkzeugsegmente;
- Figur 6: eine erste I<ombinationsmöglichkeit einer nach dem erfindungsgemässen Verfahren hergestellten Bauplatte mit einer Deckplatte;
- Figur 7: eine zweite I<ombinationsmöglichkeit von zwei spiegelbildlich angeordneten Bauplatten;
- Figur 8: eine weitere I<ombinationsmöglichkeit mit zwei Bauplatten und einer Deckplatte, und
- Figur 9: eine schematische Darstellung der Herstellung einer Bauplatte im Durchlaufverfahren.

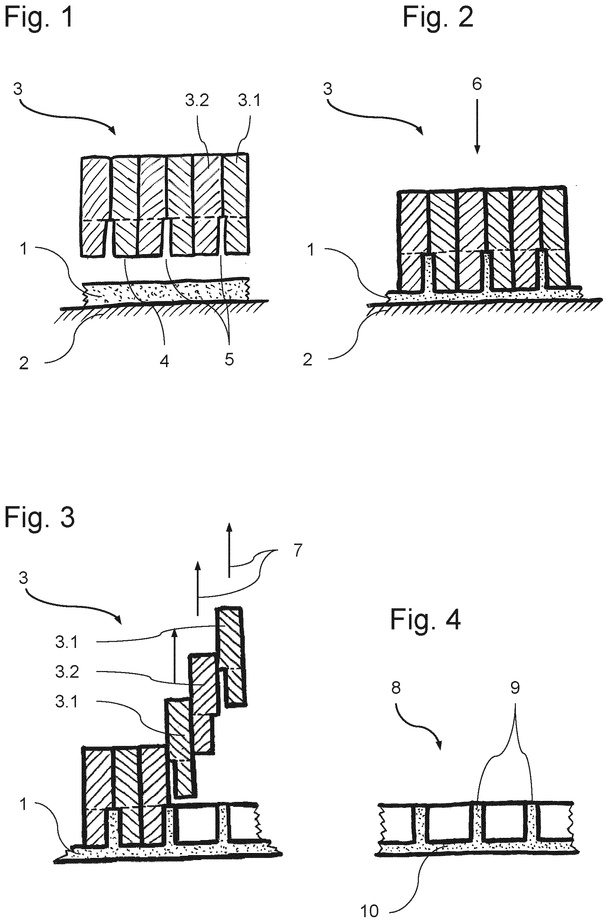

Figur 1 zeigt die Ausgangslage des Verfahrens, bei der als Ausgangsprodukt eine Werkstoffschicht 1 aus einem thermoplastischen Kunststoff, beispielsweise Polypropylen oder ein biologisch abbaubarer, thermoplastischer Kunststoff, auf einer Unterlage 2 aufliegt. Die Werkstoffschicht 1 kann einen Anteil von natürlichen oder künstlichen Fasern enthalten. Über der Werkstoffschicht 1 ist ein Werkzeug 3 angeordnet. Die Unterlage 2 und/oder das Werkzeug 3 kann beheizt sein. Das Werkzeug 3 hat eine Stirnfläche 4, die durch Schlitze 5 unterbrochen ist. Bevorzugt kommt die Werkstoffschicht 1 direkt aus einer Breitschlitz-Extrusionsanlage und wird in noch weichem Zustand auf die Unterlage 2 gebracht, wodurch Energie für das Erwärmen der Werkstoffschicht 1 eingespart wird.

In der Darstellung von Figur 2 ist das Werkzeug 3 in Richtung des Pfeils 6 auf die Werkstoffschicht 1 gepresst, wobei Plattenmaterial in die Schlitze 5 des Werkzeugs 3 gedrückt wird, entsprechend dem Prinzip des Rückwärtsfliesspressens, das heisst, das plastische Material fliesst in einer Richtung entgegengesetzt zur Bewegungsrichtung 6 des Werkzeugs 3. Würde nun das Werkzeug 3 als Ganzes zurückgezogen, wäre es kaum vermeidbar, dass die verformte Werkstoffschicht 1 am Werkzeug 3 haften bliebe, besonders dann, wenn die Schlitze 5 wenig oder gar keinen Anzug haben. Es müsste entweder eine Rückhaltevorrichtung vorgesehen sein, welche die Werkstoffschicht 1 auf der Unterlage 2 festhält, zum Beispiel eine Vakuumvorrichtung, und/oder das Werkzeug 3 müsste mit Ausstossern versehen sein, wie man sie beispielsweise im Spritzgussverfahren kennt.

Durch den in Figur 3 dargestellten Verfahrensschritt können die vorangehend erwähnten, zusätzlichen Vorrichtungen zum Entfernen des Werkzeugs eingespart werden. Dazu ist das Werkzeug 3 in Werkzeugsegmente 3.1 und 3.2 unterteilt, wobei die einzelnen Segmente unabhängig voneinander in Richtung der Werkstoffschicht 1 und von dieser weg bewegbar sind. Die Pfeile 7 veranschaulichen, wie die einzelnen Werkzeugsegmente 3.1 und 3.2 nacheinander zurückgezogen werden, während benachbarte Werkzeugsegmente das Verfahrensprodukt weiterhin gegen die Unterlage 2 pressen und darauf festhalten. In den Darstellungen der Figuren 1 bis 3 liegen die Trennebenen zwischen den einzelnen Werkzeugsegmenten 3.1, 3.2 rechtwinklig zur Zeichnungsebene, so dass die Werkzeugsegmente 3.1, 3.2 stabförmig ausgebildet sind. Zusätzlich können aber die Werkzeugsegmente 3.1, 3.2 auch noch in Ebenen parallel zur Zeichnungsebene geteilt sein, wobei diese zusätzlichen Trennungsebenen vorzugsweise an die Anordnung der Schlitze 5 beziehungsweise den späteren Rippen 9 angepasst ist.

Das nacheinander Bewegen der Werkzeugsegmente ist nicht nur beim Entformen vorteilhaft, sondern auch beim Pressvorgang, denn dadurch lässt sich in der Werkstoffschicht 1 mit weniger Kraft ein gleich hoher Druck erzeugen, wie wenn das Werkzeug 3 als Ganzes abgesenkt würde.

Figur 4 zeigt das Produkt des Verfahrens, eine Bauplatte 8 mit einer Rippenstruktur 9 und einer nach dem Pressvorgang verbleibenden Restschicht 10. Die Rippenstruktur 9 besteht dabei aus vorzugsweise zusammenhängenden Rippen, die in der Draufsicht beispielsweise dreieckig, viereckig oder sechseckig, also wabenförmig angeordnet sein können. Das zwischen den Rippen 9 verbleibende Material 10 des Ausgangsprodukts kann sehr dünn gehalten werden, je nach dem beabsichtigten Einsatzgebiet der Bauplatte 8.

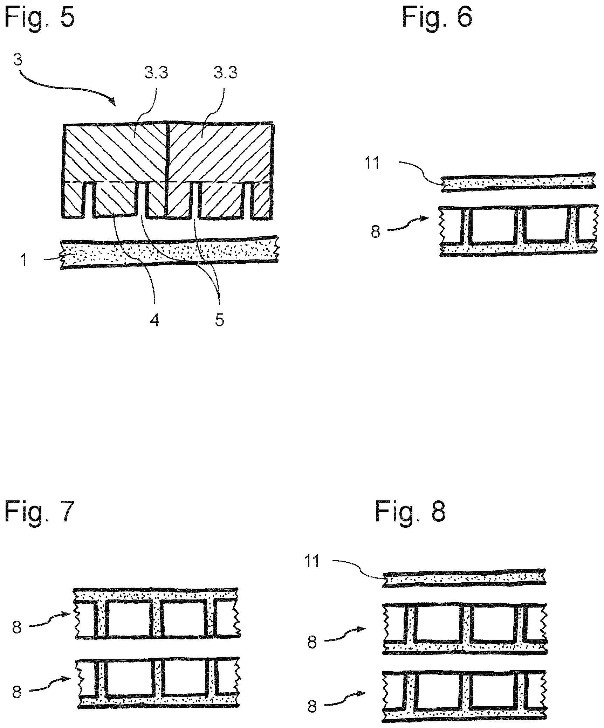

In Figur 5 ist eine alternative Ausführungsart des Werkzeugs 3 dargestellt, bei der einzelne Werkzeugsegmente 3.3 gleich ausgebildet und zwischen den Rippen getrennt sind. Die Ausbildungsart gemäss den Figuren 1 bis 3 hat jedoch den Vorteil, dass die Rippenstruktur 9 leichter entformbar ist.

Figur 6 zeigt eine Möglichkeit der Weiterverarbeitung der Bauplatte 8, indem eine Deckplatte 11 aufgebracht wird, die vorzugsweise aus dem gleichen Material besteht wie die Bauplatte 8, um den Vorteil der Wiederverwertbarkeit des Materials auszunutzen. Das Aufbringen der Deckplatte 11 geschieht bevorzugt unmittelbar nach dem Entfernen des Werkzeugs 3, wenn das Material der Bauplatte 8 noch weich ist. Die Deckplatte 11 kann dazu auch erwärmt werden, so dass sich eine verschweisste Verbundplatte ergibt. Vorzugsweise ergeben sich dadurch geschlossene Zellen, so dass die Verbundplatte auch in feuchter oder nasser Umgebung eingesetzt werden kann.

Es ist auch möglich, die das Ausgangsprodukt bildende Werkstoffschicht 1 aus zwei Schichten mit unterschiedlicher Erweichungstemperatur aufzubauen und die so gebildete Verbundplatte dem Pressvorgang zu unterziehen.

Wenn gemäss der Darstellung in Figur 7 zwei Bauplatten 8 spiegelbildlich angeordnet und in der im Zusammenhang mit Figur 6 beschriebenen Art miteinander verbunden werden, wird damit eine Verbundplatte mit gegenüber Figur 6 verdoppelter Dicke erhalten.

Figur 8 zeigt, wie beispielsweise zwei Bauplatten 8 gestapelt miteinander zu einer Verbundplatte verbunden und durch eine Deckplatte 11 ergänzt werden können. Auf diese Weise können Schichtkörper mit geringem Gewicht und hoher Biegesteifigkeit in praktisch beliebiger Dicke hergestellt werden. Sowohl die Bauplatte 8 als auch damit hergestellte Verbundplatten können auf einer oder beiden Seiten mit zusätzlichen Schichten belegt werden, beispielsweise um der jeweiligen Verbundplatte ein besonderes Aussehen zu verleihen oder diese bedruckbar zu machen.

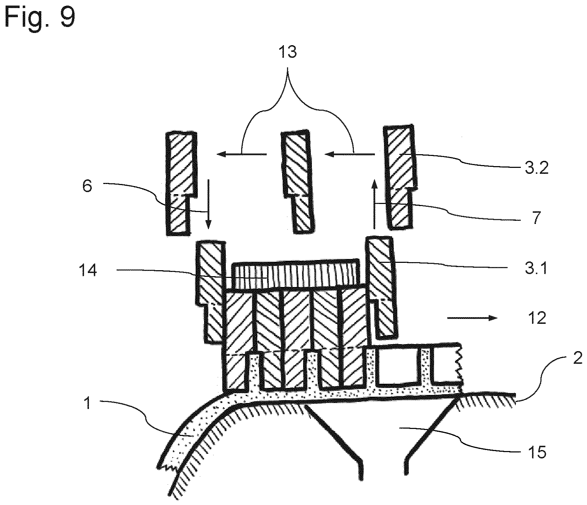

Mit dem bisher beschriebenen Verfahren lassen sich strukturierte Bauplatten 8 im Durchlauf und damit theoretisch endlos produzieren, wie Figur 9 beispielsweise und schematisch zeigt. Die Werkstoffschicht 1, vorzugsweise direkt aus einer Breitschlitz-Extrusionsdüse kommend, gelangt auf eine Unterlage 2, die in diesem Beispiel als umlaufendes Transportband ausgebildet ist und sich in einer Transportrichtung 12 vorzugsweise kontinuierlich bewegt. Die Werkzeugsegmente 3.1 und 3.2 werden links in der Figur nacheinander in Richtung des Pfeils 6 abgesenkt und durch Niederhaltemittel 14 in der abgesenkten Position gehalten, während sie sich synchron mit der Unterlage 2 bewegen. Nach dem Pressvorgang werden die Werkzeugsegmente 3.1, 3.2 nacheinander in Richtung des Pfeils 7 angehoben und in Richtung der Pfeile 13 zur Ausgangslage zurück transportiert. Die Werkzeugsegmente 3.1, 3.2 können durch pneumatische, hydraulische oder mechanische Mittel auf und ab bewegt und beispielsweise durch eine Kette umlaufend geführt werden. Auf dem durch die Pfeile 13 bezeichneten Rückweg können die Werkzeugsegmente 3.1, 3.2 automatisch kontrolliert und von gegebenenfalls anhaftenden Kunststoff- oder Faserresten befreit werden. Mit der Bezugszahl 13 sind optionale Saugmittel bezeichnet, die zur Unterstützung der Entformung eingesetzt werden können.

Die Anlage gemäss Figur 9 kann aber auch intermittierend betrieben werden, indem beispielsweise das Werkzeug 3 als Ganzes gegen die Werkstoffschicht 1 gepresst wird und danach die Entformung vorgenommen wird, indem die Werkzeugsegmente 3.1, 3.2 nacheinander zurückgezogen werden.

Das beschriebene Prinzip der unabhängig voneinander bewegbaren Werkzeugsegmente kann auch benutzt werden, um die Bauplatte 8 nach dem Pressvorgang zu kühlen und dadurch einen möglichen Verzug möglichst zu vermeiden. Während die für den Pressvorgang verwendeten Werkzeugsegmente entweder beheizt oder von der plastischen Werkzeugschicht noch warm sind, kann ein zweiter Satz von Werkzeugsegmenten vorgesehen werden, die kalt oder zusätzlich gekühlt sind und nach dem Entformen des ersten Werkzeugsegmentsatzes zum Niederhalten und auskühlen der Bauplatte eingesetzt werden.

### Bezugszeichenliste

- 1: Werkstoffschicht
- 2: Unterlage
- 3: Werkzeug
3.1 Werkzeugsegment
3.2 Werkzeugsegment
3.3 Werkzeugsegment
- 4: Stirnfläche
- 5: Schlitze
- 6: Pressrichtung
- 7: Pfeile
- 8: Bauplatte
- 9: Rippenstruktur
- 10: Restschicht
- 11: Deckplatte
- 12: Transportrichtung
- 13: Rücktransportrichtung
- 14: Niederhaltemittel
- 15: Saugmittel

## Patentansprüche

1. Verfahren zum Herstellen einer Bauplatte (8), bei dem als Ausgangsprodukt eine plastisch verformbare Werkstoffschicht (1) aus thermoplastischem Kunststoff auf einer Unterlage (2) angeordnet wird und ein Werkzeug (3) mit einer der Werkstoffschicht (1) zugewandten Stirnfläche (4) und in der Stirnfläche (4) angeordneten, rechtwinklig zur Werkstoffschicht (1) orientierten Schlitzen (5) auf die Werkstoffschicht (1) zu bewegt und gegen diese gepresst wird, so dass ein Teilvolumen der Werkstoffschicht (1) in die Schlitze (5) des Werkzeugs (3) fliesst, wonach das Werkzeug (3) zurückgezogen wird, so dass aus der Werkstoffschicht (1) rechtwinklig zu deren Ebene orientierte Rippen (9) aus der Werkstoffschicht (1) hervorstehen, **dadurch gekennzeichnet, dass** das Werkzeug (3) in Werkzeugsegmente (3.1, 3.2) unterteilt ist und diese Werkzeugsegmente (3.1, 3.2) nacheinander zurückgezogen werden.

2. Verfahren nach Patentanspruch 1, **dadurch gekennzeichnet, dass** die Werkzeugsegmente (3.1, 3.2) nacheinander gegen die Werkstoffschicht (1) gepresst werden.

3. Verfahren nach einem der vorangehenden Patentansprüche, **dadurch gekennzeichnet, dass** mindestens ein Teil der Schlitze (5) miteinander verbunden sind, derart, dass sie in der Stirnfläche (4) des Werkzeugs (3) ein Muster von Dreiecken, Vierecken, Sechsecken, Kreisen oder Ovalen bilden.

4. Verfahren nach einem der vorangehenden Patentansprüche, **dadurch gekennzeichnet, dass** der Kunststoff Polypropylen ist.

5. Verfahren nach einem der vorangehenden Patentansprüche, **dadurch gekennzeichnet, dass** der Kunststoff ein biologisch abbaubarer Kunststoff ist.

6. Verfahren nach einem der vorangehenden Patentansprüche, **dadurch gekennzeichnet, dass** der Kunststoff Fasern enthält.

7. Verfahren nach einem der vorangehenden Patentansprüche, **dadurch gekennzeichnet, dass** mindestens ein Teil des Kunststoffs Recyclingkunststoff ist.

8. Verfahren nach einem der vorangehenden Patentansprüche, **dadurch gekennzeichnet, dass** die Werkstoffschicht (1) eine Verbundschicht aus mindestens zwei Kunststoffen mit unterschiedlichen Erweichungstemperaturen ist und die Kunststoffschicht mit dem niedrigeren Erweichungspunkt dem Werkzeug (3) zugewandt wird.

9. Verfahren nach einem der vorangehenden Patentansprüche, **dadurch gekennzeichnet, dass** zwei Bauplatten (8) und/ oder eine Bauplatte (8) und eine Deckplatte (11) miteinander verbunden werden.

10. Verfahren nach Anspruch 9, **dadurch gekennzeichnet, dass** der Verbindungsvorgang vor dem Erhärten des Kunststoffs erfolgt.

11. Verfahren nach einem der Ansprüche 2 bis 10, **dadurch gekennzeichnet, dass** die Werkstoffschicht (1) in Richtung ihrer Ebene bewegt wird und dass die Werkzeugsegmente (3.1, 3.2) in der gleichen Richtung mit der gleichen Geschwindigkeit bewegt werden, während sie nacheinander auf die Werkstoffschicht (1) gepresst und anschliessend nacheinander von dieser abgehoben werden.

12. Anlage zur Durchführung des Verfahrens nach Anspruch 11, **dadurch gekennzeichnet, dass** eine in Richtung ihrer Ebene bewegbare Unterlage (2) für die Auflage einer Werkstoffschicht (1) vorhanden ist, dass Werkzeugsegmente (3.1, 3.2) derart angeordnet und ausgestattet sind, dass sie synchron mit der Unterlage (2) bewegbar sind und dass Bewegungsmittel vorhanden sind, mit denen jedes Werkzeugsegment (3.1, 3.2) unabhängig von benachbarten Werkzeugsegmenten (3.2, 3.2) in Richtung zur Unterlage (2) und von dieser weg bewegbar ist.
